# EUROPÄISCHE PATENTSCHRIFT

(11) **EP 1 010 053 B1**
(45) Veröffentlichungstag und Bekanntmachung des Hinweises auf die Patenterteilung: **31.07.2002**
(21) Anmeldenummer: 98951176.1
(22) Anmeldetag: 19.08.1998
(51) Int. Cl.: G06F 1/12

(54) **INTERFACESCHALTUNG FÜR FULLCUSTOM- UND SEMICUSTOM-TAKTDOMÄNEN**
INTERFACE CIRCUIT FOR FULL-CUSTOM AND SEMI-CUSTOM TIMING DOMAINS
CIRCUIT D'INTERFACE POUR DOMAINES D'HORLOGE A LA DEMANDE ET PERSONNALISABLES

(30) Priorität: 28.08.1997 DE 19737589
(43) Veröffentlichungstag der Anmeldung: 21.06.2000
(73) Patentinhaber: SIEMENS AKTIENGESELLSCHAFT, 80333 München (DE)
(72) Erfinder: NIEDERMAIER, Jürgen, D-81541 München (DE); WEDER, Uwe, D-84072 Au (DE); ENGL, Korbinian, D-85461 Bockhorn (DE)
(86) Internationale Anmeldenummer: DE9802431
(87) Internationale Veröffentlichungsnummer: WO9912090

(56) Entgegenhaltungen:
- EP-A- 0 341 616
- US-A- 5 638 015
- US-A- 5 646 521

## Beschreibung

Der Anmeldungsgegenstand betrifft eine Integrierte Schaltung mit den Merkmalen des Oberbegriffs des Anspruchs 1.

Integrierte Schaltungen IC's hoher Komplexität mit analogem Schaltungs-Teil FC (für: fullcustom) und digitalem Schaltungs-Teil SC (für: semicustom) besitzen mehrere Taktdomänen. Der semicustom-Teil enthält im Allgemeinen eine Taktdomäne in Form eines Taktbaums, der fullcustom-Teil mehrere Taktdomänen. Eine Realisierung der Taktdomänen des fullcustom-Teils in Form eines Taktbaums scheidet jedoch auf Grund der nichtregulären Layoutstruktur des fullcustom-Teils, der punktuell benötigten großen Treiberfähigkeit und einer zuweilen erforderlichen besonderen Berücksichtigung von Laufzeiten, was in Fachkreisen auch als spezielles Timing bezeichnet wird, zwischen den verschiedenen fullcustom-Taktdomänen aus.

Bei Übergang mehrerer Hundert Datensignale von der fullcustom- zur semicustom-Taktdomäne und umgekehrt besteht die Schwierigkeit in der exakten Simulierbarkeit und in einem setup- und holdzeitverletzungsfreien Entwurf unter gleichzeitiger Testbarkeit der Interfacesignale.

Im semicustom-Teil wird die Gatterauswahl erst bei der Umsetzung des VHDL-Codes vorgenommen. Über einen Place&Route-Algorithmus werden diese Gatter, im Layout lokal verstreut plaziert. Für jedes einzelne semicustom Eingangs/Ausgangs - Signal I/O (für: Input/Output) wird damit ein individuelles Timing erforderlich. Exakte Timingsimulationen basierend auf Layoutdaten sind bei einer sehr großen Anzahl von lokal verstreuten I/O-Signalen nicht mehr möglich.

Außerdem muß sich die Treiberdimensionierung jedes fullcustom-Ausgangssignals individuell am anzusteuernden semicustom-Gatter, dessen Eingangskapazität und dem Zuleitungsdelay orientieren, wobei diese Werte jedoch erst nach dem Place&Routealgorithmus, also in einem sehr späten Entwurfsstadium vollständig zur Verfügung stehen.

Dem Anmeldungsgegenstand liegt das Problem zugrunde, die angesprochenen Schwierigkeiten zu überwinden.

Der Anmeldungsgegenstand löst das Problem durch die Merkmale des kennzeichnenden Teils des Anspruchs 1.

Der Anmeldungsgegenstand weist folgende Vorteile auf:
- Verwendung von charakterisierten Standardzellen, wodurch eine geschlossene Schleife und damit die vollständige und exakte Timingsimulation des semicustom-Teils basierend auf den extrahierten Layoutdaten möglich ist.
- Durch die Vorgabe der Schnittstellengatter und deren Lage im Layout vereinfacht sich die Dimensionierung der korrespondierenden fullcustom-Gatter und speziell deren Treiber auf Grund definierter Leitungslängen und Lasten drastisch.

Vorteilhafte Weiterbildungen sind in den Unteransprüchen angegeben.

Der Anmeldungsgegenstand wird im Folgenden als Ausführungsbeispiel in einem zum Verständnis erforderlichen Umfang anhand von Figuren näher beschrieben. Dabei zeigen:
- Figur 1: eine schematische Darstellung der anmeldungsgemäßen integrierten Schaltung
- Figur 2: eine prinzipielle Darstellung der Schaltung der Schnittstelle I aus Figur 1
- Figuren 3, 4, 5 und 6: nähere schaltungstechnische Einzelheiten der Schnittstelle I.

In den Figuren bezeichnen gleiche Bezeichnungen gleiche Elemente.

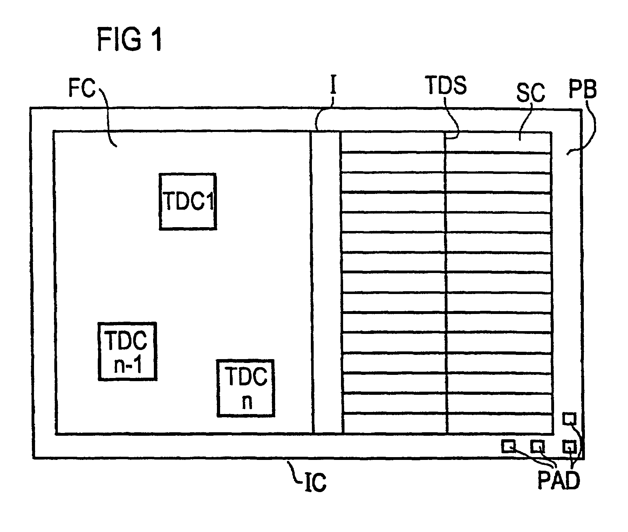

Figur 1 zeigt die Ausgestaltung (Layout) einer integrierten Schaltung IC (für: Integrated Circuit), die einen komplexen Aufbau mit beispielsweise 3 Millionen Transistoren aufweisen mag. Die integrierte Schaltung weist einen Schaltungsabschnitt SC (für: semicustom), der im Wesentlichen in digitaler Schaltungstechnik ausgeführt ist und im folgenden als digitaler Schaltungsabschnitt bezeichnet ist sowie einen Schaltungsabschnitt FC (für: fullcustom), der im Wesentlichen in analoger Schaltungstechnik ausgeführt ist und im folgenden als analoger Schaltungsabschnitt bezeichnet ist, auf. Die integrierte Schaltung weist am Rand einen Pad-Bereich PB auf, in dem in der Figur nur einige exemplarisch dargestellte Kontaktierflächen PAD angeordnet sind. Der digitale Schaltungsabschnitt SC weist eine Taktdomäne TDS, die, wie in der Zeichnung dargestellt, als Taktbaum ausgestaltet sein mag, auf. Der analoge Schaltungsabschnitt FC weist mehrere Taktdomänen TDC1,..,TCn-1 und TDCn auf. Anmmeldungsgemäß ist zwischen dem digitalen Schaltungsabschnitt und dem analogen Schaltungsabschnitt eine Schnittstelle I (für: Interface) angeordnet. Ein Signal, das von dem digitalen Schaltungsabschnitt zum analogen Schaltungsabschnitt oder vom analogen Schaltungsabschnitt zum digitalen Schaltungsabschnitt weiterzuleiten ist, wird über die Schnittstelle I weitergeleitet. In einer besonderen Ausführungsform des Anmeldungsgegenstandes werden sämtliche von einem Schaltungsabschnitt zu dem anderen Schaltungsabschnitt weiterzuleitenden Signale über die Schnittstelle I weitergeleitet. In einer bevorzugten Ausführungsform des Anmeldungsgegenstandes werden sowohl sämtliche von dem digitalen Schaltungsabschnitt zum analogen Schaltungsabschnitt weiterzuleitenden Signale, als auch sämtliche von dem analogen Schaltungsabschnitt zum digitalen Schaltungsabschnitt weiterzuleitenden Signale über die Schnittstelle I weitergeleitet. Die Schaltungsblöcke fc_sc 0, fc_sc 1 bzw. sc_fc sind zu einem Gesamt-Interface zusammengefaßt und sind auf der integrierten Schaltung an zentraler Stelle zwischen dem digitalen Schaltungsabschnitt und dem analogen Schaltungsabschnitt angeordnet.

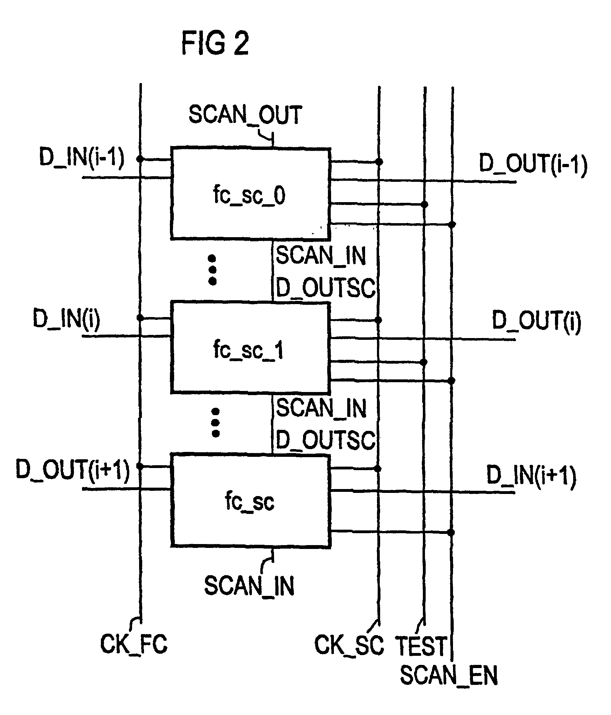

Figur 2 zeigt nähere Einzelheiten der Schnittstelle I. Zur Weiterleitung eines Signals DIN_(i-1), DIN_(i) von dem analogen Schaltungsabschnitt zu dem digitalen Schaltungsabschnitt ist ein Schaltungsblock fc_sc 0 bzw. fc_sc 1 vorgesehen. Zur Weiterleitung eines Signals von dem digitalen Schaltungsabschnitt zu dem analogen Schaltungsabschnitt ist ein Schaltungsblock sc_fc vorgesehen. Die Schaltungsblöcke fc_sc bzw. sc_fc sind in einer der Anzahl weiterzuleitender Signale entsprechenden Anzahl vorgesehen. Ein Schaltungsblock ist mit einem ersten Taktsignal CK_FC einem zweiten Taktsignal CK_SC, einem Signal TEST und einem Aktivierungssignal SCAN_EN beaufschlagt. Das Signal TEST ist dann wirksamgeschaltet, wenn es einen hohen Signalpegel "1" aufweist. Ein Schaltungsblock weist einen Eingang SCAN_IN auf. Der Ausgang D_OUTSC eines Schaltungsblocks fc_sc 0, fc_sc 1 ist mit dem Eingang SCAN_IN eines anderen Schaltungsblocks fc_sc 0, fc_sc 1 verbunden.

Das erste Taktsignal CK_FC und das zweite Taktsignal CK_SC mögen die selbe Frequenz und eine Phasenverschiebung um eine halbe Taktperiode gegeneinander aufweisen.

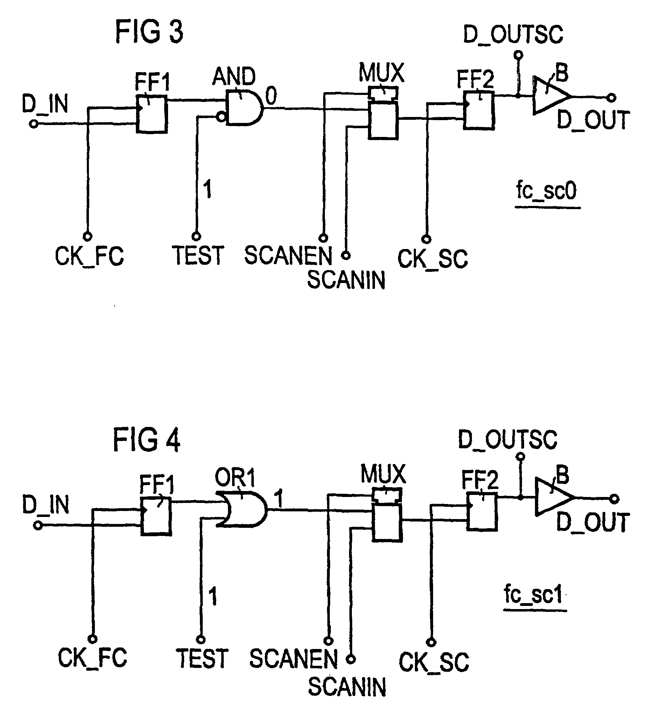

Fig 3 zeigt nähere Einzelheiten eines Schaltungsblocks fc_sc 0. Einem Flip-Flop FF1 ist an seinem Dateneingang ein von dem analogen Schaltungsabschnitt geliefertes Datensignal D_IN und an seinem Trigger-Eingang das erste Taktsignal CK_FC zugeführt. Einem die logische UND-Funktion realisierenden Gatter AND ist eingangsseitig das von dem Flip-Flop FF1 ausgangsseitig abgegebene Signal und das invertierte TEST-Signal zugeführt. Einer Datenweiche MUX (für: Multiplexer) ist eingangsseitig das von dem Gatter AND ausgangsseitig abgegebene Signal und das SCANIN-Signal zugeführt. Nach Maßgabe des Signales SCAN_EN wird eines der beiden der Datenweiche eingangsseitig zugeführten Signale auf den Ausgang durchgeschaltet.

Einem Flip-Flop FF2 ist an seinem Dateneingang das von der Datenweiche ausgangsseitig abgegebene Signal und an seinem Trigger-Eingang das zweite Taktsignal CK_SC zugeführt. Am Ausgang des Flip-Flops FF2 wird das Signal D_OUTSC und das Signal D_OUT geliefert, wobei das Signal D_OUT über einen Puffer B (für: Buffer) zwischenverstärkt ist.

Zunächst wird davon ausgegangen, daß zum einen das Signal TEST einen niedrigen Signalpegel "0" aufweist, womit es nicht wirksamgeschaltet ist und das dem anderen Eingang des Gatters AND zugeführte Signal durchgeschaltet wird und zum anderen das Signal SCANEN einen Zustand aufweist, bei dem das von dem Gatter AND gelieferte Signal durchgeschaltet wird. Das Signal D_IN wird mit dem Taktsignal CK_FC von dem Flip-Flop FF1 übernommen und dem Flip-Flop FF2 zugeführt und von dem Flip-Flop FF2 mit dem Taktsignal CK_SC dem digitalen Schaltungsabschnitt zugeführt.

Weist das Signal TEST einen hohen Signalpegel "1" auf, womit es wirksamgeschaltet ist, gibt das die logische UND-Funktion realisierende Gatter unabhängig von dem Signalpegel an seinem anderen Eingang ausgangsseitig stets einen niedrigen Signalpegel "0" aus, der dann auch das Signal D_OUTSC und das Signal D_OUT bildet. Durch ein wirksamgeschaltetes Signal TEST sind also die Signale D_OUT an den Ausgängen aller Schaltungsblöcke fc_sc 0 auf einen niedrigen Signalpegel "0" setzbar. Das Signal TEST in den Figuren 3 und 4 generiert vordefinierte Signale am Eingang des digitalen Schaltungsabschnitts, wodurch ein separater Test des semicustom-Teils möglich wird.

Weist das Signal SCANEN einen Zustand auf, bei dem das Signal SCANIN von der Datenweiche MUX durchgeschaltet wird, wird es von einem zum nächsten Schaltungsblock fc_sc 0, fc_sc 1 bzw. sc_fc weitergeschaltet. Ein dem ersten Schaltungsblock zugeführtes Signal SCANIN erscheint also an den Ausgängen aller Schaltungsblöcke fc_sc 0, fc_sc 1, sc_fc. Alle FF-Ausgänge DOUT_SC können über das Signal SCANEN, den Multiplexer MUX und das Flipflip FF2 als scan path in Reihe geschaltet werden. Der eingebaute Scan-Path ermöglicht das Monitoring aller Interfacedatensignale.

Ein in Fig 4 dargesstellter Schaltungsblock fc_sc 1 weist im Unterschied zu dem in Fig 3 dargestellten Schaltungsblock fc_sc 0 anstelle eines die logische UND-Funktion realisierendes Gatters ein die logische ODER-Funktion realisierendes Gatter OR 1 auf. Bei einem wirksamgeschalteten Signal TEST gibt das Gatter OR 1 unabhängig von dem Signalpegel an seinem anderen Eingang ausgangsseitig stets einen hohen Signalpegel "1" aus, der dann auch das Signal D_OUTSC und das Signal D_OUT bildet. Durch ein wirksamgeschaltetes Signal TEST sind also die Signale D_OUT an den Ausgängen aller Schaltungsblökke fc_sc 1 auf einen hohen Signalpegel "1" setzbar.

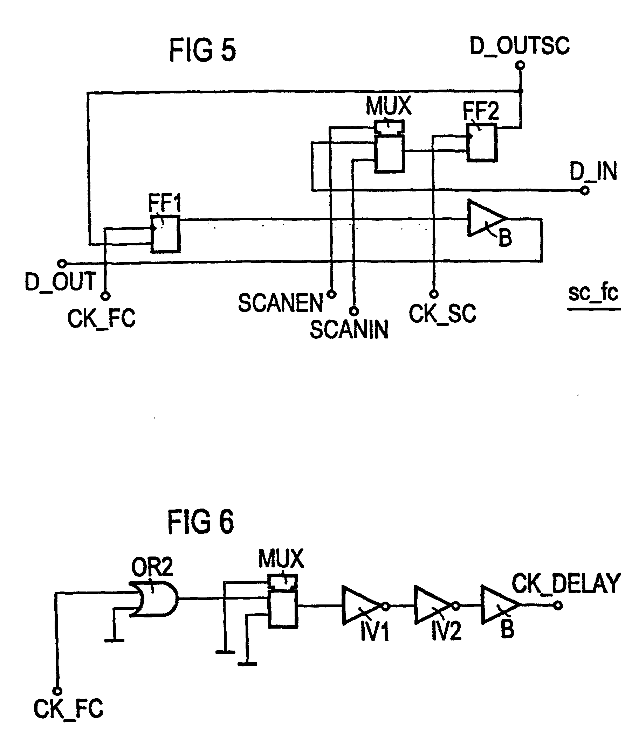

Fig 5 zeigt nähere Einzelheiten eines Schaltungsblocks sc_fc. Einer Datenweiche MUX ist eingangsseitig ein von dem digitalen Schaltungsabschnitt geliefertes Datensignal D_IN und das SCANIN-Signal zugeführt. Nach Maßgabe des Signales SCAN_EN wird eines der beiden der Datenweiche eingangsseitig zugeführten Signale auf den Ausgang durchgeschaltet. Einem Flip-Flop FF2 ist an seinem Dateneingang das von der Datenweiche ausgangsseitig abgegebene Signal und an seinem Trigger-Eingang das zweite Taktsignal CK_SC zugeführt. Am Ausgang des Flip-Flops FF2 wird das Signal D_OUTSC geliefert. Einem Flip-Flop FF1 ist an seinem Dateneingang das von dem Flip-Flop FF2 ausgangsseitig abgegebene Signal D_OUTSC und an seinem Trigger-Eingang das erste Taktsignal CK_FC zugeführt. Am Ausgang des Flip-Flops FF1 wird das Signal D_OUT an den analogen Schaltungsabschnitt geliefert, wobei das Signal D_OUT über einen Puffer B (für: Buffer) zwischenverstärkt ist.

Fig 6 zeigt eine Taktverzögerungsschaltung mittels derer aus einem vorhandenen Taktsignal CK_FC das um eine feste Phasenverschiebung verzögerte Taktsignal CK_DELAY als Taktsignal CK_SC gewonnen werden kann.

Ein die logische ODER-Funktion realisierendes Gatter OR 2 ist an einem Eingang mit dem Taktsignal CK_FC und an dem anderen Eingang mit dem Bezugspotential (Masse) beaufschlagt. Eine Datenweiche MUX ist eingangsseitig mit dem von dem Gatter OR 2 gelieferten Signal und mit dem Bezugspotential (Masse) beaufschlagt. Der Auswahleingang der Datenweiche ist mit dem Bezugspotential beaufschlagt. Das von der Datenweiche abgegebene Signal steht nach der Weiterleitung über zwei Inverter INV1, INV2 und einen nichtinvertierenden Puffer B als Signal CK_DELAY zur Verfügung.

Mit einer auf die Verzögerung (delay) der Interfaceschaltungen nach den Figuren 3, 4 und 5 abgestimmten Interfaceschaltung nach Figur 6 steuert der fullcustom-Takt den semicustom-Taktbaum in der Art an, daß ein ausreichendes delay zwischen den beiden Taktdomänen erzeugt wird, das setup- und hold-Zeitverletzungen innerhalb des Interfaceblocks ausschließt.

## Patentansprüche

1. Integrierte Schaltung (IC) umfassend
- einen im wesentlichen in analoger Schaltungstechnik aufgebauten analogen Schaltungsabschnitt (FC) mit einer ein erstes Taktsignal (CK_FC) führenden ersten Taktdomäne (TDC1,..,TDCn)
- einen im wesentlichen in digitaler Schaltungstechnik aufgebauten digitalen Schaltungsabschnitt (SC) mit einer ein zweites Taktsignal (CK_SC) führenden Taktdomäne (TDS)
**dadurch gekennzeichnet, daß**
- zwischen den analogen Schaltungsabschnitt und den digitalen Schaltungsabschnitt eine Schnittstelle eingefügt ist, derart, daß ein Datensignal, das von dem digitalen Schaltungsabschnitt zum analogen Schaltungsabschnitt weitergeleitet wird, in der Schnittstelle zunächst mit dem zweiten Taktsignal abgetaktet wird und mit dem ersten Taktsignal an den analogen Schaltungsabschnitt ausgegeben wird.

2. Integrierte Schaltung (IC) umfassend
- einen im wesentlichen in analoger Schaltungstechnik aufgebauten analogen Schaltungsabschnitt (FC) mit einer ein erstes Taktsignal (CK_FC) führenden ersten Taktdomäne (TDC1,..,TDCn)
- einen im wesentlichen in digitaler Schaltungstechnik aufgebauten digitalen Schaltungsabschnitt (SC) mit einer ein zweites Taktsignal (CK_SC) führenden Taktdomäne (TDS)
**dadurch gekennzeichnet, daß**
- zwischen den analogen Schaltungsabschnitt und den digitalen Schaltungsabschnitt eine Schnittstelle eingefügt ist, derart, daß ein Datensignal, das von dem analogen Schaltungsabschnitt zum digitalen Abschnitt weitergeleitet wird, in der Schnittstelle zunächst mit dem ersten Taktsignal abgetaktet wird und mit dem zweiten Taktsignal an den digitalen Schaltungsabschnitt ausgegeben wird.

3. Integrierte Schaltung (IC) umfassend
- einen im wesentlichen in analoger Schaltungstechnik aufgebauten analogen Schaltungsabschnitt (FC) mit einer ein erstes Taktsignal (CK_FC) führenden ersten Taktdomäne (TDC1,..,TDCn)
- einen im wesentlichen in digitaler Schaltungstechnik aufgebauten digitalen Schaltungsabschnitt (SC) mit einer ein zweites Taktsignal (CK_SC) führenden Taktdomäne (TDS)
**dadurch gekennzeichnet, daß**
- zwischen den analogen Schaltungsabschnitt und den digitalen Schaltungsabschnitt eine Schnittstelle eingefügt ist, derart, daß zum einen ein Datensignal, das von dem analogen Schaltungsabschnitt zum digitalen Abschnitt weitergeleitet wird, in der Schnittstelle zunächst mit dem ersten Taktsignal abgetaktet wird und mit dem zweiten Taktsignal an den digitalen Schaltungsabschnitt ausgegeben wird und zum anderen ein Datensignal, das von dem digitalen Schaltungsabschnitt zum analogen Schaltungsabschnitt weitergeleitet wird, in der Schnittstelle zunächst mit dem zweiten Taktsignal abgetaktet wird und mit dem ersten Taktsignal an den analogen Schaltungsabschnitt ausgegeben wird.

4. Integrierte Schaltung nach einem der vorstehenden Ansprüche
**dadurch gekennzeichnet, daß**
die Schnittstelle zentral zwischen den analogen Schaltungsabschnitt und den digitalen Schaltungsabschnitt eingefügt ist

5. Integrierte Schaltung nach einem der vorstehenden Ansprüche
**gekennzeichnet durch**
eine Schnittstelle, über die sämtliche zwischen dem analogen Schaltungsabschnitt und dem digitalen Schaltungsabschnitt weiterzuleitenden Signale geführt sind.

6. Integrierte Schaltung nach einem der vorstehenden Ansprüche
**gekennzeichnet durch**
eine Verzögerungsschaltung derart, daß das zweite Taktsignal **durch** Verzögerung des ersten Taktsignales erzeugt wird.

7. Integrierte Schaltung nach einem der vorstehenden Ansprüche 2 bis 6
**gekennzeichnet durch**
eine Schnittstelle derart, daß an einem dem digitalen Schaltungsabschnitt zugewandten Ausgang nach Maßgabe eines Signales TEST ein vorgegebenes Signal "0" bzw. "1" ausgegeben wird.

8. Integrierte Schaltung nach einem der vorstehenden Ansprüche 2 bis 7
**gekennzeichnet durch**
eine Schnittstelle derart, daß nach Maßgabe eines Signales SCAN_EN ein Signal, das an einem dem digitalen Schaltungsabschnitt zugewandten Ausgang anliegt, in Reihe zu einem anderen Ausgang durchgeschaltet wird.

## Claims

1. Integrated circuit (IC) comprising
- an analogue circuit section (FC) constructed essentially using analogue circuit technology and having a first timing domain (TDC1,..,TDCn) carrying a first clock signal (CK_FC),
- a digital circuit section (SC) constructed essentially using digital circuit technology and having a timing domain (TDS) carrying a second clock signal (CK_SC),
**characterized in that**
- an interface is inserted between the analogue circuit section and the digital circuit section, in such a way that a data signal which is forwarded from the digital circuit section to the analogue circuit section is firstly latched with the second clock signal in the interface and is output with the first clock signal to the analogue circuit section.

2. Integrated circuit (IC) comprising
- an analogue circuit section (FC) constructed essentially using analogue circuit technology and having a first timing domain (TDC1,..,TDCn) carrying a first clock signal (CK_FC),
- a digital circuit section (SC) constructed essentially using digital circuit technology and having a timing domain (TDS) carrying a second clock signal (CK_SC),
**characterized in that**
- an interface is inserted between the analogue circuit section and the digital circuit section, in such a way that a data signal which is forwarded from the analogue circuit section to the digital section is firstly latched with the first clock signal in the interface and is output with the second clock signal to the digital circuit section.

3. Integrated circuit (IC) comprising
- an analogue circuit section (FC) constructed essentially using analogue circuit technology and having a first timing domain (TDC1,..,TDCn) carrying a first clock signal (CK_FC),
- a digital circuit section (SC) constructed essentially using digital circuit technology and having a timing domain (TDS) carrying a second clock signal (CK_SC),
**characterized in that**
- an interface is inserted between the analogue circuit section and the digital circuit section, in such a way that, on the one hand, a data signal which is forwarded from the analogue circuit section to the digital section is firstly latched with the first clock signal in the interface and is output with the second clock signal to the digital circuit section and, on the other hand, a data signal which is forwarded from the digital circuit section to the analogue circuit section is firstly latched with the second clock signal in the interface and is output with the first clock signal to the analogue circuit section.

4. Integrated circuit according to one of the preceding claims,
**characterized in that**
the interface is inserted centrally between the analogue circuit section and the digital circuit section.

5. Integrated circuit according to one of the preceding claims,
**characterized by**
an interface via which all the signals that are to be forwarded between the analogue circuit section and the digital circuit section are passed.

6. Integrated circuit according to one of the preceding claims,
**characterized by**
a delay circuit such that the second clock signal is generated by delaying the first clock signal.

7. Integrated circuit according to one of the preceding claims 2 to 6,
**characterized by**
an interface such that, at an output facing the digital circuit section, a predetermined signal "0" or "1" is output according to a signal TEST.

8. Integrated circuit according to one of the preceding claims 2 to 7,
**characterized by**
an interface such that, according to a signal SCAN_EN, a signal which is present at an output facing the digital circuit section is switched through in series to another output.

## Revendications

1. Circuit intégré (IC), comprenant:
- une partie analogique de circuit (FC) réalisée par une technique de circuit essentiellement analogique et comportant un premier domaine d'horloge (TDC1, ..., TDCn) qui conduit un premier signal d'horloge (CK_FC),
- une partie numérique de circuit (SC) construite par une technique de circuit essentiellement numérique et comportant un domaine d'horloge (TDS) conduisant un deuxième signal d'horloge (CK_SC),
**caractérisé en ce que**:
- entre la partie analogique du circuit et la partie numérique du circuit est insérée une interface de telle sorte qu'un signal de données qui est transféré de la partie numérique du circuit vers la partie analogique du circuit soit d'abord cadencé dans l'interface par le deuxième signal d'horloge et est délivré à la partie analogique du circuit avec le premier signal d'horloge.

2. Circuit intégré (IC), comprenant:
- une partie analogique de circuit (FC) réalisée par une technique de circuit essentiellement analogique et comportant un premier domaine d'horloge (TDC1, ..., TDCn) qui conduit un premier signal d'horloge (CK_FC),
- une partie numérique de circuit (SC) construite par une technique de circuit essentiellement numérique et comportant un domaine d'horloge (TDS) conduisant un deuxième signal d'horloge (CK_SC),
**caractérisé en ce que**:
- entre la partie analogique du circuit et la partie numérique du circuit est insérée une interface de telle sorte qu'un signal de données qui est transféré de la partie analogique du circuit à la partie numérique est d'abord cadencé dans l'interface par le premier signal d'horloge et est délivré à la partie numérique du circuit avec le deuxième signal d'horloge.

3. Circuit intégré (IC), comprenant:
- une partie analogique de circuit (FC) réalisée par une technique de circuit essentiellement analogique et comportant un premier domaine d'horloge (TDC1, ..., TDCn) qui conduit un premier signal d'horloge (CK_FC),
- une partie numérique de circuit (SC) construite par une technique de circuit essentiellement numérique et comportant un domaine d'horloge (TDS) conduisant un deuxième signal d'horloge (CK_SC),
**caractérisé en ce que**:
- entre la partie analogique du circuit et la partie numérique du circuit est insérée une interface de telle sorte que, d'une part, un signal de données qui est transféré de la partie analogique du circuit à la partie numérique est d'abord cadencé dans l'interface par le premier signal d'horloge et est délivré à la partie numérique du circuit avec le deuxième signal d'horloge, et que d'autre part, un signal de données qui est transféré de la partie numérique du circuit à la partie analogique du circuit est d'abord cadencé dans l'interface par le deuxième signal d'horloge et est transféré à la partie analogique du circuit avec le premier signal d'horloge.

4. Circuit intégré selon l'une des revendications précédentes, **caractérisé en ce que** l'interface est insérée au centre, entre la partie analogique du circuit et la partie numérique du circuit.

5. Circuit intégré selon l'une des revendications précédentes, **caractérisé par** une interface par laquelle passe l'ensemble des signaux qui doivent être transférés entre la partie analogique du circuit et la partie numérique du circuit.

6. Circuit intégré selon l'une des revendications précédentes **caractérisé par** un circuit de temporisation qui a pour effet que le deuxième signal d'horloge est créé par temporisation du premier signal d'horloge.

7. Circuit intégré selon l'une des revendications précédentes 2 à 6, **caractérisé par** une interface telle qu'un signal "0" ou "1" prédéterminé en fonction d'un signal TEST est délivré sur une sortie dirigée vers la partie numérique du circuit.

8. Circuit intégré selon l'une des revendications précédentes 2 à 7, **caractérisé par** une interface telle qu'en fonction d'un signal SCAN_EN, un signal appliqué sur une sortie dirigée vers la partie numérique du circuit est passé en série sur une autre sortie.
